(19) Europäisches Patentamt
European Patent Office
Office européen des brevets

(11) EP 2 237 993 B1

(12) **EUROPEAN PATENT SPECIFICATION**

(45) Date of publication and mention of the grant of the patent:
**27.07.2011 Bulletin 2011/30**

(21) Application number: **07872083.6**

(22) Date of filing: **31.12.2007**

(51) Int Cl.:
***B60R 21/0132*** *(2006.01)* ***B60P 1/04*** *(2006.01)*
***B60Q 1/00*** *(2006.01)* ***B60T 8/1755*** *(2006.01)*

(86) International application number:
**PCT/IB2007/004477**

(87) International publication number:
**WO 2009/083752 (09.07.2009 Gazette 2009/28)**

(54) **METHOD AND APPARATUS FOR PREVENTING ROLLOVER OR OVER-SPEED FOR A VEHICLE**

VERFAHREN UND VORRICHTUNG ZUM VERHINDERN EINES ÜBERSCHLAGS ODER VON ZU HOHER GESCHWINDIGKEIT FÜR EIN FAHRZEUG

PROCÉDÉ ET APPAREIL POUR EMPÊCHER LES TONNEAUX ET LA SURVITESSE D'UN VÉHICULE

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**13.10.2010 Bulletin 2010/41**

(73) Proprietor: **Renault Trucks**
**69800 Saint Priest (FR)**

(72) Inventor: **DECHAMP, François**
**F-71250 CLUNY (FR)**

(74) Representative: **Putet, Gilles**
**Renault Trucks**
**VTEC France-Corporate Patents TER E70 2 12**
**99, route de Lyon**
**69806 Saint Priest Cedex (FR)**

(56) References cited:
**WO-A-2004/110809**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 237 993 B1

## Description

### TECHNICAL FIELD

The present invention relates to the technical field of driving assistance for drivers to avoid rollover or over-speeding while traveling on roads. In a preferred but not limitative application, the invention is directed to anti-rollover systems and methods for trucks.

### BACKGROUND ART

Truck rollover is a serious problem in the transportation community as a vehicle rollover involves almost always the driver's death as well as the death or injury of the drivers and passengers of the other vehicles eventually involved in the rollover.

Therefore, many methods and apparatus such as disclosed in WO 2004/110809 were developed for assisting the driver to avoid any over speeding on curved roads where the rollover risk is particularly high.

In order to achieve this, many systems and methods involve an estimation or calculation of a lateral or transversal acceleration of the vehicle and a comparison of this calculated transversal acceleration to a maximal transversal acceleration admissible for the vehicle to avoid rollover in a particular situation.

In order to achieve this, the prior art systems conduct a dynamic computing of the maximum transversal acceleration and compare this dynamic value to the actual transversal acceleration of the truck and forecast the future transversal acceleration of the truck in order to make sure that the vehicle will not be in rollover situation for the next coming part of the road. If the prior art anti rollover systems manage to reduce the risk of rollover situation, they use methods which involve heavy calculation for estimating the actual transversal acceleration and the maximal transversal acceleration admissible for the vehicle according to the geometric of the vehicle and to road data and therefore need powerful computing resources.

The prior art systems aim at preventing roll-over situation but the monitoring of the present speed of the vehicle can also be used to prevent any risk of alteration of the balance of the vehicle resulting of over speeding as well as any risk of mishandling of the commercial load of the vehicle or any risk of discomfort of the passengers resulting of over speeding.

Therefore, it appears the need of an anti-rollover or over-speed detecting system which manages to prevent the risk of rollover with the same rate of success as prior art but which needs less computation resources in order to have a higher speed of actualization and to allow a deeper investigation and forecasting of the traveling conditions of the vehicle ahead of its actual position.

### SUMMARY OF THE INVENTION

In order to achieve this, the invention concerns a method for preventing vehicle rollover or over-speed for a vehicle traveling on a road by, at least:

- calculating a maximal safe speed for a present position as the vehicle travels on the road according to:
- road geometry data comprising at least the curvature of the road for a plurality of points ahead of the present position;
- a safety relation which the traveling vehicle V must respect at any moment or any point of the road, said safety relation being based on a comparison of the combined longitudinal and transversal acceleration of the vehicle at a point of the road with a maximal combined longitudinal and transversal acceleration admissible for the vehicle;
- and executing an action if the present speed at the present position exceed the maximal safe speed calculated for the present position.

According to an aspect of the invention the safety relation comprises the following relation:

$$\left(\frac{At}{At\max}\right)^2 + \left(\frac{Al}{Al\max}\right)^2 \leq 1$$

where :

- At is a transversal acceleration of the vehicle at a point of the road;
- Al is a longitudinal acceleration of the vehicle at a point of the road;

- Atmax is a maximal transversal acceleration admissible for the vehicle to travel with no risk of rollover or over-speed;
- Almax is a maximal longitudinal acceleration admissible for the vehicle to travel with no risk of rollover or over-speed;

By using the safety relation as set above, the method according to the invention lightens the calculation necessary for determining whether the vehicle is in a situation of high risk of rollover or over-speed. More particularly, as both the maximum transversal acceleration and the maximal longitudinal acceleration are not dynamically computed during the traveling but are constant values for a same travel, this also contributes to faster computation.

According to one aspect of the invention, the determination of the maximal longitudinal (Almax) and transversal (Atmax) accelerations involves trial sessions with the vehicle and/or a vehicle of the same type. The determination of Almax and Atmax can be conducted for avoiding at least roll-over risk but also to avoid any other risk situation such as vehicle sliding or to guaranty good transportation conditions for the commercial load or the passengers of the vehicle.

The maximal longitudinal (Almax) and transversal (Atmax) accelerations can be either the same for any load conditions of the vehicle or have different values according to the load of the vehicle. For example, the method according to the invention will thus use different values of maximal longitudinal and transversal accelerations depending of the load of the vehicle, each value of the maximal longitudinal acceleration and the maximal transversal acceleration corresponding for example to a different range of load for the vehicle and will also take into consideration the position of the gravity center of the vehicle according to this load.

Therefore, according to another aspect of the invention, the determination of the maximal longitudinal (Almax) and transversal (Atmax) accelerations takes into consideration the actual load of the vehicle and/or the actual position of the gravity center of the vehicle.

According to an implementation of the invention, the determination is conducted once at the beginning of the travel and the same values of the maximal longitudinal acceleration and the maximal transversal acceleration are used during the travel assuming the commercial load of the vehicle does not change during said travel. For the invention, a travel will be a movement from a starting point at which the vehicle is loaded or unloaded to a destination point where the vehicle is loaded or unloaded, the commercial load of the vehicle being unchanged during the travel.

According to a preferred implementation of the invention, the calculation of the maximal safe speed for the present position comprises a simulation of the transversal and longitudinal accelerations for a plurality of points of an ahead portion of road delimited by the present point ($P_p$) and a distal point ($P_d$), the maximal safe speed for the present position being the maximal speed for which the simulated accelerations respect the safety relation at each point of the ahead portion of the road.

According to one aspect of this implementation, the simulation involves comparing a simulated longitudinal acceleration with an available longitudinal acceleration based on a simulated transversal acceleration and based on the safety relation.

According to another aspect of this implementation, the simulation uses at least:

- an estimation relation $At_x = k(Vs)^2$ where :
- $At_s$ is a simulated transversal acceleration of the vehicle at the same point of the ahead portion;
- K is the curvature of the road at the same point of the ahead portion;
- Vs is a safe speed at a point of the ahead portion;

- a simulation relation $\left(\frac{At_s}{At\max}\right)^2 + \left(\frac{Al_s}{Al\max}\right)^2 = 1$ where:

- $At_s$ is a simulated transversal acceleration of the vehicle at a point of the ahead portion; and
- $Al_s$ is a simulated longitudinal acceleration of the vehicle at the same a point of the ahead portion;
- and the safety relation.

According to a variant of the preferred implementation, the simulation comprises a backward sequence during which the simulated accelerations are calculated iteratively for each consecutive point of the portion ahead starting from the distal point and going backward to the present point.

According to an aspect of this variant of the preferred implementation, during the backward sequence, it is checked iteratively that the maximal safe speed at each point p of the portion ahead given by the formula $V\max(p) = \frac{\sqrt{At\max}}{k(p)}$ induce when travelling from a point p to the following p+1 a deceleration (i.e. negative acceleration) respecting the safety relation and if not a new maximal safe speed is computed using the simulation relation, the maximal safe speed for each point p of the ahead portion being recorded.

According to another variant of the preferred implementation, the simulation comprises a forward sequence during which the simulated accelerations are calculated iteratively for each consecutive point of the head portion starting from the present point and going forward to the distal point.

According to an aspect of this variant of the preferred implementation, during the forward sequence, it is checked iteratively that the maximal safe speed at each point p of the portion ahead given by the formula $\cdot Vmax(p) = \frac{\sqrt{Atmax}}{k(p)}$ or previously computed induce when travelling from a point p to the following p+1 an acceleration (i.e. positive acceleration) respecting the safety relation and, if not, a new maximal safe speed is computed using the simulation relation, the maximal safe speed for each point p of the ahead portion being recorded. According to still another variant of the preferred implementation, the simulation comprises, first, the backward sequence and, second, the forward sequence conducted using the maximal safe speed computed during the backward sequence, the maximal safe speed computed during the forward sequence for the present position being used for the comparison with the present speed of the vehicle.

According to the invention, the depth of the simulation, i.e. the length of the ahead portion on which the simulation is done, can be chosen at different values depending on, for example, the speed and/or the weight of the vehicle. According to the invention, the length of the ahead portion is superior to the braking distance of the vehicle and preferably with a safety margin. The length of the portion ahead can for example be superior to 1,2 times the braking distance of the vehicle.

Also according to the invention, the distance between two consecutive points of the iteration, can be chosen at different values depending on, for example the speed of the vehicle, and/or the computing power of the system implementing the invention but also depending on the geometrical data available.

According to a particularly preferred but non exclusive way of implementing the method for preventing vehicle rollover or over-speed according to the invention, the maximal safe speed is dynamically calculated for consecutive present positions of the vehicle as it moves on the road.

According to the invention, the positioning and the speed acquisition can be done in several ways, for example, using accelerometers and/or inertial units. According to an aspect of the invention, the present position and/or the present speed of the vehicle is determined using GPS data provided by an inboard system.

Also according to the invention, the course followed or to be followed by the vehicle can be recorded before the vehicle starts its travel. But the course followed by the vehicle can also be dynamically determined according to the present position of the vehicle and to a destination point.

According to the invention, the simulation of the calculation can be done using a ad hoc or in house digital map but also using a commercially available digital map, the geometry data of the road at least being provided by this digital map or calculated from this digital map. In any case, the method for preventing vehicle rollover or over-speed according to the invention may comprise a step of calculating the road curvature for any point of the road ahead of the vehicle. According to the invention, the action ordered by the method if the control speed is above the safety speed can be of various kind such as for example the emission of a warning signal and/or the emission of an order for an automatic slowing of the vehicle.

The invention concerns also an apparatus for preventing a vehicle rollover or over-speed comprising:

- means for dynamically determining a present position of the vehicle traveling on a road;
- means for dynamically determining a present speed of the vehicle traveling on the road;
- memory means storing :
- geometric data of the road comprising at least the curvature of the road at a plurality of point on the road ahead of the vehicle ;
- a maximal transversal acceleration (Atmax) admissible for the vehicle to travel with no risk of rollover or over-speed;
- a maximal longitudinal acceleration (Almax) admissible for the vehicle to travel with no risk of rollover or over-speed;
- computing means programmed to implement the method according to the invention and to emit a signal and/or an action order according to the result of the implementation of the method.

According to an aspect of the invention, the apparatus further comprises:

- a digital map stored in the memory means;
- means for a user to enter a destination point;
  and the computing means are further programmed for dynamically determining the course of the vehicle according to its present position and to the destination point.

The various above aspects, implementations, variants, embodiments or objects of the invention may be combined in various ways with each others provided the combined aspects, implementations, variants, embodiments or objects are not incompatible or mutually exclusive.

## DESCRIPTION OF THE FIGURES

Other aspect and advantages of the present invention will be apparent from the following detailed description made in conjunction with the accompanying drawing illustrating schematically some non-limitative embodiments of the invention.

The figure 1 is a schematic view of a road followed by a vehicle, the speed of which is monitored according to the method according to the invention in order to prevent rollover or over-speed.

The figure 2 is a schematic drawing of an apparatus for implementing the method for presenting vehicle rollover or over-speed according to the invention.

## DESCRIPTION OF THE INVENTION

The aim of the invention is to prevent the rollover or over-speed of a vehicle V traveling on a road R as schematically shown on figure 1. As it is well-known by the man skilled in the art, when the speed of the vehicle is too high for a specific road bend or turn, the vehicle may roll over. In order to prevent the occurrence of such situation, the invention proposes to monitor the speed of the controlled vehicle and to check continuously or at least regularly that the current speed of the vehicle is not higher than a safety speed above which the risk of rollover or over-speed is quite high.

In order to achieve this and according to a preferred but non exclusive way to implement the invention, the vehicle is equipped with an apparatus for preventing vehicle rollover or over-speed as schematically depicted on figure 2 and designated as a whole by reference 1. According to the shown example, the apparatus 1 comprises means for dynamically determining the present position of the vehicle V traveling on the road R. The positioning means 2 may be of different types and are for example based on the Global Positioning System (GPS). Therefore, the positioning means 2 comprise an antenna 3 for receiving the signals from the GPS satellites. Using the satellite signals, the positioning means 2 compute or determine the present position $P_p$ of the vehicle. As the positioning means compute the present position $P_p$ continuously, or at least repeatedly every second or several cents of second, it can be used by the positioning means 2 or different computing means for determining the present speed of the vehicle V. As the implementation of GPS system is very well-known by the skilled of the art, there is no need for further explanation of how the present position and/or present speed is determined and/or provided within the apparatus according to the invention.

According to the invention, the apparatus 1 further comprises memory means 4 on which is recorded geometric data of the road R comprising at least the curvature of the road or information for computing such curvature.

In a preferred embodiment the geometric data 5 of the road consist in a digital map such as a digital map commercially available for being used with GPS positioning and traveling systems. The apparatus 1 further comprises computing means 6 connected to the memory means 4. The computing means 6 are also connected to display means 7 and to input means such as a keyboard 8. The display means 7 and the input means 8 may, of course, be embedded and form a touch screen. The input means 8 can be used for entering a destination point for the vehicle, the computing means 6 being able to compute dynamically the course for the vehicle to reach its destination point starting from its present position $P_p$. This traveling road or course is afterwards recorded or stored in the memory means 4 as a digital file 9. According to an aspect of the invention, the computing means 6 are also adapted to implement the method of preventing a vehicle rollover or over-speed according to the invention. In order to achieve this, the memory means 4 can store an executable code 10 of a computer program implementing the method according to the invention.

By executing the computer program 10, the computing means 6 calculate continuously or at least regularly a maximal safe speed for a present position as the vehicle travels on the road R following the course corresponding to the digital road 9 recorded in the memory means 4. For doing this, the computing means are able to compute for each point of the road the curvature of the road if it is not available from the digital map 5. Such curvature of the road is necessary for monitoring the rollover or over-speed risk. As it is well-known, on a straight road having a curvature equal to zero there is no risk of rollover or over-speed whatever the speed of the vehicle is, whereas the rollover or over-speed risk raises with the curvature value and the speed for road bend or turn.

In order to conduct the rollover or over-speed risk monitoring, the method according to the invention suggests the use of : a safety relation which the traveling vehicle must respect at any moment or any point of the road :

$$\left(\frac{At}{At\max}\right)^2 + \left(\frac{Al}{Al\max}\right)^2 \leq 1$$

where :

- At is a transversal acceleration of the vehicle at a point of the road;
- Al is a longitudinal acceleration of the vehicle at a point of the road;
- Atmax is a maximal transversal acceleration admissible for the vehicle to travel with no risk of rollover or over-speed;
- Almax is a maximal longitudinal acceleration admissible for the vehicle to travel; Almax may reflect maximum deceleration capacity of the vehicle, due to the power of the vehicle's braking system and/or the maximum acceleration capacity of the vehicle and/or the maximum longitudinal adherence at the road/tire interface.

The main advantage of such relation is to use, for the computation and for a same travel, Atmax and Almax with constant values.

The merit of the inventor was to show that the use of such constant values gives enough precision for guarantying the safety of the vehicle. These Atmax and Almax values will preferably be determined through trial sessions with the vehicle or a vehicle of a same type. These trial sessions will be done with a fully loaded vehicle so that the Atmax and Almax might be used for every situation as maximum values for the lateral and longitudinal accelerations. Atmax and Almax can also be determined for different level of commercial load of the vehicle or a vehicle of the same type and therefore, recorded as different values corresponding to different ranges of commercial load of the vehicle.

If so, the computing means will be adapted to determine, at the beginning of a travel, which Atmax and Almax values to use according to the actual load of the vehicle, this actual load being input by the driver or provided by a vehicle electronical control unit. Once the Atmax and Almax values are determined, these will be used during all the travel assuming the commercial load does not change during the travel or, at least, is not increased. Once the vehicle V starts traveling, the positioning means 2 compute continuously or repetitively the present position $P_p$ and the present speed of the vehicle. Meanwhile, the computing means 6 will proceed to the computing of a safe maximal speed for the present position of the vehicle.

In a preferred embodiment or implementation of the method according to the invention, this calculation will be made so that the calculated maximal safe speed avoid any risk of rollover or over-speed at the present position of the vehicle but also avoid the occurrence of such rollover or over-speed risk for any point situated in a portion of road ahead of the vehicle V. Such an ahead portion A of the road R will start at the present position or point $P_p$ of the vehicle V and end at a distal point $P_d$. The linear distance between the present position $P_p$ and the distal point $P_d$, corresponding to the ahead portion length, may be chosen to different values depending on the vehicle type and/or the vehicle load but also of geometric characteristics of the road. The ahead portion length is for example, chosen as being superior to 1,2 times the braking distance of the vehicle according to its present speed. This ahead portion A will be used as a sliding window during the repetitive or continuous determination of the maximal safety speed for consecutive present positions of the vehicle. The ahead portion length may have the same value for all the travel. This length might also be adjusted during the travel according to the type of road and more particularly, the curvature variation of said road R. Once the ahead portion A is determined, the computing means 6 will conduct a simulation of the transversal and longitudinal accelerations for a plurality of points being part of the ahead portion A. The plurality of points used for the calculation will be distributed along the ahead road, each point being separated from the following by a chosen constant distance or by a distance which may vary depending on the geometric data provided by the digital map and by the curvature of the road. The density of point is generally low for straight road portions and higher for bent road portions. According to the invention, the maximal safety for the present position $P_p$ will be the maximal speed for which the simulated accelerations respect the safety relation at each calculation point of the ahead portion A.

For conducting this simulation the computing means 6 use at least the following formula and relation:

- an estimation relation $At_x = k(Vs)^2$ where :
- $At_s$ is a simulated transversal acceleration of the vehicle at the same point of the ahead portion;
- K is the curvature of the road at the same point of the ahead portion;
- Vs is a maximal safe speed at a point of the ahead portion;

- a simulation relation $\left(\frac{At_s}{At\max}\right)^2 + \left(\frac{Al_s}{Al\max}\right)^2 = 1$ where:

- $At_s$ is a simulated transversal acceleration of the vehicle at a point of the ahead portion; and
- $Al_s$ is a simulated longitudinal acceleration of the vehicle at the same a point of the ahead portion;
- and the safety relation.

According to a preferred embodiment of the invention, the simulation conducted by the computing means

comprises first a backward sequence during which the simulated accelerations are calculated iteratively for each consecutive point of the ahead portion starting from the distal point Pd and going backward to the present point Pp. After the backward sequence, the simulation may comprise a forward sequence during which the simulated accelerations are calculated iteratively from each consecutive points of the ahead portion, starting from the present point Pp and going forward to the distal point Pd. During the backward sequence it will be the maximal deceleration capability of the vehicle which will be the limitative parameter whereas during the forward sequence it will be the maximal acceleration capability. As for a loaded truck the driving power available is generally not enough for reaching the maximal longitudinal acceleration whereas the braking or deceleration capability might be critical, it is chosen to begin the simulation with the backward sequence during which it will be checked that the vehicle has always enough braking resources to stay under a maximal safe speed at any point of the ahead portion. In such a case, the forward sequence is optional. Nevertheless, in some cases it can be chosen to start with the forward sequence.

For any point p of the road the maximal safe speed ever admissible Vmax, without taking into consideration the actual acceleration and deceleration capabilities of the vehicle neither the travel history, is given by the formula $Vmax(p) = \frac{\sqrt{Atmax}}{k(p)}$, where k(p) is the curvature of the road at the point p. This formula can be amended in order to take into consideration the gravity according to the banking of the road a the point p.

During the backward sequence the computing means 6 will calculate iteratively the maximal safe speed Vs(p) at each point p of the portion ahead according to the following rules and formulae:

- For the distal point Pd, the maximal safe speed Vs(Pd) is taken as equal to Vmax(Pd);
- Then, for each point p it is processed as following:

A. At first Vs(p) is taken as equal to Vmax(p):

If Vs(p) ≤ Vs(p+1) then the process skips to the next point p-1 of process as there is no need of deceleration or breaking;

B. If Vs(p) ≥ Vs(p+1) then there is a need of deceleration and it must be checked that the needed deceleration can be achieved while still respecting the safety relation. To do so, the following computation can for example be conducted:

- an estimation of the travel duration T for going from point p to point p+1 is calculated: $T = \frac{2 \times ld(p,p+1)}{Vs(p) + Vs(p+1)}$ where ld(p,p+1) is the linear distance between the point p and the point p+1;
- The simulated transversal acceleration $At_s(p)$ at the point p is taken as $At_s(p) = k(p)[Vs(p)]^2$. This formula can be amended in order to take into consideration the gravity according to the banking of the road at the point p.
- The simulated longitudinal acceleration $Al_s(p)$ at the point p is taken as $Als(p) = \left|\frac{Vs(p+1) - Vs(p)}{T}\right|$.

  This formula can be amended in order to take into consideration the gravity according to the gradient of the road at the point p.
- An available longitudinal acceleration Aa is computed using the simulation relation thus $Aa = Almax \times \sqrt{1 - \left(\frac{Ats(p)}{Atmax}\right)^2}$;
- The simulated longitudinal acceleration $Al_s(p)$ is compared to the available longitudinal acceleration Aa:

  o If $Al_s(p) \leq Aa$ then the vehicle will able to decelerate without any danger so there is no need to modify the value of Vs(p) then the process skips to the next point p-1 of process

  o If $Al_s(p) > Aa$ then the vehicle will not be able to decelerate in safe conditions, so the value of Vs(p)

must be reduced, and for example the value of Vs(p) is reduced by a correcting constant C being for example in the range of $\frac{Vs(p+1)-Vs(p)}{2}$ to $\frac{Vs(p+1)-Vs(p)}{100}$. The new value of the maximal safety speed Vs(p) at the point p Vs(p) = Vs(p) - C will used for conducting again the above process starting from B as long as Vs(p) does not allow the vehicle to respect the safety relation. Once the computed Vs(p) allows the vehicle to respect the safety relation the process skip to the next point p-1.

The process is conducted so on until the present point Pp is reached. The maximal safe speeds determined for each point of the portion ahead during the backward sequence are recorded. The maximal safe speed determined for the present point Pp at the end of this backward sequence can be directly used as the safety speed to which the present speed V(Pp) is compared. But in order raise the accuracy or the reliability of the calculated safe speeds, it is conducted the forward sequence during which it will be checked that the speed raising according to the maximal safe speeds computed during the backward sequence is compliant with the safety relation.

During the forward sequence the computing means 6 will calculate iteratively the maximal safe speed Vs(p) at each point p of the portion ahead according to the following rules and formulae:

- For the present point Pd, the maximal safe speed Vs(Pp) is the one computed at the end of the backward sequence.;
- Then, for each point p it is processed as following:

  C. At first Vs(p) is taken as equal to Vs(p) as computed during the backward sequence:

    If Vs(p) ≤ Vs(p-1) then the process skips to the next point p+1 of process as there is no positive acceleration (i.e. speed raising);

  D. If Vs(p) ≥ Vs(p-1) then there is some positive acceleration and it must be checked that this positive acceleration is compliant with the safety relation. To do so the following computation can for example be conducted:

  - an estimation of the travel duration T for going from point p-1 to point p is calculated :

$$T=\frac{2\times ld(p-1,p)}{Vs(p-1)+Vs(p)}$$

    where ld(p-1,p) is the linear distance between the point p-1 and the point p;
  - The simulated transversal acceleration $At_s(p)$ at the point p is taken as $At_s(p) = k(p)[Vs(p)]^2$. This formula can be amended in order to take into consideration the gravity according to the banking of the road at the point p.
  - The simulated longitudinal acceleration $Al_s(p)$ at the point p is taken as $Als(p)=\left|\frac{Vs(p)-Vs(p-1)}{T}\right|$.

    This formula can be amended in order to take into consideration the gravity according to the gradient of the road at the point p.

  - An available longitudinal acceleration Aa is computed using the simulation relation thus $Aa = Almax\times\sqrt{1-\left(\frac{Ats(p)}{Atmax}\right)^2}$;
  - The simulated longitudinal acceleration $Al_s(p)$ is compared to the available longitudinal acceleration Aa:

    o If $Al_s(p)$ ≤ Aa then the vehicle will be able to accelerate without any danger, so there is no need to modify the value of Vs(p) and the process skips to the next point p+1 of process

    o If $Al_s(p)$ > Aa then the vehicle will not be able to accelerate in safe conditions, so the value of Vs(p) must be reduced, and for example the value of Vs(p) is reduced by a correcting constant C being for

example in the range of $\frac{Vs(p)-Vs(p-1)}{2}$ to $\frac{Vs(p)-Vs(p-1)}{100}$. The new value of the maximal safety speed Vs(p) at the point p Vs(p) = Vs(p) - C will used for conducting again the above process starting from D as long as Vs(p) does not allow the vehicle to respect the safety relation. Once the computed Vs(p) allows the vehicle to respect the safety relation the process skip to the next point p+1.

The process is conducted so on until the distal point Pd is reached. The maximal safe speeds determined for each point of the portion ahead during the forward sequence are recorded.

It should be remarked that according to the notation use on the figure 1, the point referenced as p-1 is situated, following the traveling direction $F_1$, before the point referenced as p whereas the point referenced as p+1 is situated after the point p according also to the traveling direction as shown by the arrow $F_1$. Thus, during the backward sequence, the computation is done iteratively going from point p+1 to point p then to point p-1, whereas during the forward sequence the computation is done iteratively going from point p-1 through point p and then to point p+1.

Once this computation is done, the present speed Vp of the vehicle is compared to this maximal safety speed at the present point as previously determined.

If the present speed Vp of the vehicle V is below the maximal safe speed, no action is taken. On the contrary, if the present speed of the vehicle V is above this maximal safe speed then the computing means 6 emit an order for an action. This action can be done directly by the apparatus 1 according to the invention or can be an order sent to the vehicle electronic control unit 11, for example, for emitting a warning signal such as a visible signal by lamp 12 and/or an alarm sound or message emitted by a speaker 13. The order emitted by the computing means 6 can also be an order for activating a slowing apparatus 14 or procedure of the vehicle V.

Once the computation is done for the present point, the computing means 6 will conduct the same calculation, simulation and control for the new position present point of the vehicle which will be the origin of the new ahead portion.

As such computation is made continuously or at least repetitively as the vehicle V travels along the road R, the apparatus and the method according to the invention manage to reduce if not cancel any risk of rollover or over-speed of the vehicle.

While the invention has been shown and described with reference to certain embodiments thereof, it would be understood by those skilled in the art that changes in form and details may be made therein without departing from the spirit and scope of the invention as defined in the appended claims

## Claims

1. Method for preventing vehicle rollover or over-speed for a vehicle (V) traveling on a road (R) by, at least:

   - calculating a maximal safe speed for a present position ($P_p$) as the vehicle travels on the road according to:

     - road geometry data comprising at least the curvature of the road (R) for a plurality of points ahead of the present position ($P_p$);
     - a safety relation which the traveling vehicle (V) must respect at any moment or any point of the road,

   - executing an action if the present speed at the present position exceed the maximal safe speed calculated for the present position,
   - **characterized in that** said safety relation is based on a comparison of the combined longitudinal and transversal acceleration of the vehicle at a point of the road with a maximal combined longitudinal and transversal acceleration admissible for the vehicle.

2. Method for preventing vehicle rollover or over-speed according to claim 1, wherein said safety relation comprises the following relation:

$$\left(\frac{At}{At\max}\right)^2 + \left(\frac{Al}{Al\max}\right)^2 \leq 1$$

   where :

- At is a transversal acceleration of the vehicle at a point of the road;
- Al is a longitudinal acceleration of the vehicle at a point of the road;
- Atmax is a maximal transversal acceleration admissible for the vehicle to travel with no risk of rollover or over-speed;
- Almax is a maximal longitudinal acceleration admissible for the vehicle to travel with no risk of rollover or over-speed.

**3.** Method for preventing vehicle rollover or over-speed according to claim 2, wherein the determination of the maximal longitudinal (Almax) and transversal (Atmax) accelerations takes into consideration the actual load of the vehicle and/or the actual position of the gravity center of the vehicle.

**4.** Method for preventing vehicle rollover or over-speed according to any of claims 1 to 3, wherein the action comprises the emission of a warning signal and/or the emission of an order for an automatic slowing of the vehicle.

**5.** Method for preventing vehicle rollover or over-speed, according to any of claims 1 to 4, wherein the calculation of the maximal safe speed for the present position comprises a simulation of the transversal (At) and longitudinal (Al) accelerations for a plurality of points of an ahead portion (A) of road (R) delimited by the present point (pp) and a distal point ($p_d$), the maximal safe speed for the present position ($P_p$) being the maximal speed for which the simulated accelerations respect the safety relation at each point of the ahead portion (A) of the road (R).

**6.** Method for preventing vehicle rollover or over-speed according to claim 5, wherein the simulation involves comparing a simulated longitudinal acceleration with an available longitudinal acceleration based on a simulated transversal acceleration and based on the safety relation.

**7.** Method for preventing vehicle rollover or over-speed according to claim 5 or 6 wherein the simulation uses at least:

- an estimation relation $At_s = k(Vs)^2$ where :
- $At_s$ is a simulated transversal acceleration of the vehicle at the same point of the ahead portion;
- K is the curvature of the road at the same point of the ahead portion;
- Vs is a maximal safe speedat a point of the ahead portion;
- a simulation relation $\left(\frac{At_s}{At\max}\right)^2 + \left(\frac{Al_s}{Al\max}\right)^2 = 1$ where:
- $At_s$ is a simulated transversal acceleration of the vehicle at a point of the ahead portion; and
- Als is a simulated longitudinal acceleration of the vehicle at the same point of the ahead portion;
- and the safety relation.

**8.** Method for preventing vehicle rollover or over-speed according to any of claims 5 or 7, where in the simulation comprises a backward sequence during which the simulated accelerations are calculated iteratively for each consecutive point of the ahead portion (A) starting from the distal point ($P_d$) and going backward to the present point ($P_p$).

**9.** Method for preventing vehicle rollover or over-speed according to claim 8, wherein, during the backward sequence, it is checked iteratively that the maximal safe speed at each point (p) of the portion ahead given by the formula induces when travelling from a point (p) to the following (p+1) a deceleration (i.e. negative acceleration) respecting the safety relation and, if not, a new maximal safe speed is computed using the simulation relation, the maximal safe speed for each point (p) of the ahead portion being recorded.

**10.** Method for preventing vehicle rollover or over-speed according to any of claims 5 to 9, where in the simulation comprises a forward sequence during which the simulated accelerations are calculated iteratively for each consecutive point of the ahead portion (A) starting from the present point ($P_p$) and going forward to the distal point ($P_d$).

**11.** Method for preventing vehicle rollover or over-speed according to claim 10, wherein, during the forward sequence, it is checked iteratively that the maximal safe speed at each point (p) of the portion ahead given by the formula $V\max(p) = \frac{\sqrt{At\max}}{k(p)}$ or previously computed induces when travelling from a point (p) to the following (p+1)

an acceleration (i.e. positive acceleration) respecting the safety relation and, if not, a new maximal safe speed is computed using the simulation relation, the maximal safe speed for each point (p) of the ahead portion being recorded.

**12.** Method for preventing vehicle rollover or over-speed according to claims 8 or 9, and 10 or 11, wherein the simulation comprises, first, the backward sequence and, second, the forward sequence conducted using maximal safe speeds for each point of the portion ahead calculated during the backward sequence.

**13.** Method for preventing vehicle rollover or over-speed according to any of claims 1 to 12, wherein the maximal safe speed is dynamically calculated for consecutive present positions of the vehicle (V) as it moves on the road (R).

**14.** Apparatus for preventing a vehicle rollover or over-speed comprising :

- means (2) for dynamically determining a present position of the vehicle traveling on a road;
- means (2, 6) for dynamically determining a present speed of the vehicle traveling on the road;
- memory means (4) storing :
- geometric data (5) of the road;
- a maximal transversal acceleration (Atmax) admissible for the vehicle to travel with no risk of rollover or over-speed;
- a maximal longitudinal acceleration (Almax) admissible for the vehicle to travel with no risk of rollover or over-speed;
- computing means (6) programmed to implement the method according to any of claims 1 to 13 and to emit a signal and/or an action order according to the result of the implementation of the method.

**15.** Apparatus for preventing a vehicle rollover or over-speed according to claim 14, further comprising :

- a digital map (5) stored in the memory means (4);
- means (7) for a user to enter a destination point;

and wherein the computing means (6) are further programmed for dynamically determining the course of the vehicle according to its present position ($P_p$) and to the destination point.

**Patentansprüche**

**1.** Verfahren zur Verhinderung eines Fahrzeugüberschlags oder einer zu hohen Geschwindigkeit bei einem auf einer Straße (R) fahrenden Fahrzeug (V) durch wenigstens:

- Berechnung einer maximalen Sicherheitsgeschwindigkeit für eine derzeitige Position ($P_p$), wenn das Fahrzeug auf der Straße fährt, entsprechend

  - Straßengeometriedaten, die wenigstens den Kurvenverlauf der Straße (R) für eine Vielzahl von Stellen vor der derzeitigen Position ($P_p$) umfassen,
  - einer Sicherheitsrelation, die das fahrende Fahrzeug (V) in jedem Moment und an jeder Stelle der Straße beachten muss;

- Ausführen einer Aktion, wenn die derzeitige Geschwindigkeit an der derzeitigen Position die maximale Sicherheitsgeschwindigkeit überschreitet, die für die derzeitige Position berechnet wurde,
- **dadurch gekennzeichnet, dass** die Sicherheitsrelation auf einem Vergleich der kombinierten Längs- und Querbeschleunigung des Fahrzeugs an einer Stelle der Straße mit einer maximalen kombinierten Längs- und Querbeschleunigung basiert, die für das Fahrzeug zulässig ist.

**2.** Verfahren zur Verhinderung eines Fahrzeugüberschlags oder einer zu hohen Geschwindigkeit nach Anspruch 1, bei dem die Sicherheitsrelation die folgende Relation umfasst.

$$\left(\frac{At}{At\max}\right)^2 + \left(\frac{Al}{Al\max}\right)^2 \leq 1$$

wobei:

- At eine Querbeschleunigung des Fahrzeugs an einer Stelle der Straße ist,
- Al eine Längsbeschleunigung des Fahrzeugs an einer Stelle der Straße ist,
- Atmax eine maximale Querbeschleunigung ist, die für das Fahrzeug zulässig ist, um ohne Risiko eines Überschlags oder einer zu hohen Geschwindigkeit zu fahren,
- Almax eine maximale Längsbeschleunigung ist, die für das Fahrzeug zulässig ist, um ohne Risiko eines Überschlags oder einer zu hohen Geschwindigkeit zu fahren.

**3.** Verfahren zur Verhinderung eines Fahrzeugüberschlags oder einer zu hohen Geschwindigkeit nach Anspruch 2, bei dem die Bestimmung der maximalen Längs (Almax)- und Quer (Atmax)-Beschleunigung die momentane Beladung des Fahrzeugs und/oder die momentane Position des Schwerpunkts des Fahrzeugs berücksichtigt.

**4.** Verfahren zur Verhinderung eines Fahrzeugüberschlags oder einer zu hohen Geschwindigkeit nach einem der Ansprüche 1 bis 3, bei dem die Aktion die Ausgabe eines Warnsignals und/oder die Ausgabe eines Befehls für eine automatische Verlangsamung des Fahrzeugs umfasst.

**5.** Verfahren zur Verhinderung eines Fahrzeugüberschlags oder einer zu hohen Geschwindigkeit nach einem der Ansprüche 1 bis 4, bei dem die Berechnung der maximalen Sicherheitsgeschwindigkeit für die derzeitige Position eine Simulation der Quer (At)- und Längs (A1)-Beschleunigungen für eine Vielzahl von Stellen eines vorne liegenden Abschnitts (A) einer Straße (R) umfasst, der durch die derzeitige Stelle ($P_p$) und eine distale Stelle ($P_d$) begrenzt ist, wobei die maximale Sicherheitsgeschwindigkeit für die derzeitige Position ($P_p$) die maximale Geschwindigkeit ist, für die die simulierten Beschleunigungen die Sicherheitsrelation an jeder Stelle des vorne liegenden Abschnitts (A) der Straße (R) beachten.

**6.** Verfahren zur Verhinderung eines Fahrzeugüberschlags oder einer zu hohen Geschwindigkeit nach Anspruch 5, bei dem die Simulation einen Vergleich einer simulierten Längsbeschleunigung mit einer vorhandenen Längsbeschleunigung auf der Basis einer simulierten Querbeschleunigung und auf der Basis der Sicherheitsrelation beinhaltet.

**7.** Verfahren zur Verhinderung eines Fahrzeugüberschlags oder einer zu hohen Geschwindigkeit nach Anspruch 5 oder 6, bei dem die Simulation wenigstens verwendet:

- eine Schätzrelation $At_s = k(Vs)^2$, wobei:

  - $At_s$ eine simulierte Querbeschleunigung des Fahrzeugs an der gleichen Stelle des vorne liegenden Abschnitts ist,
  - K die Krümmung der Straße an der gleichen Stelle des vorne liegenden Abschnitts ist,
  - Vs eine maximale Sicherheitsgeschwindigkeit an einer Stelle des vorne liegenden Abschnitts ist,

- eine Simulationsrelation $\left(\frac{At_s}{At\max}\right)^2+\left(\frac{Al_s}{Al\max}\right)^2=1$, wobei:

  - $At_s$ eine simulierte Querbeschleunigung des Fahrzeugs an einer Stelle des vorne liegenden Abschnitts ist, und
  - $Al_s$ eine simulierte Längsbeschleunigung des Fahrzeugs an der gleichen Stelle des vorne liegenden Abschnitts ist,

- und die Sicherheitsrelation.

**8.** Verfahren zur Verhinderung eines Fahrzeugüberschlags oder einer zu hohen Geschwindigkeit nach einem der Ansprüche 5 oder 7, bei dem die Simulation eine Rückwärtssequenz umfasst, während der die simulierten Beschleunigungen iterativ für jede aufeinanderfolgende Stelle des vorne liegenden Abschnitts (A) beginnend bei der distalen Stelle ($P_d$) und rückwärtsgehend zu der derzeitigen Stelle ($P_p$) berechnet werden.

**9.** Verfahren zur Verhinderung eines Fahrzeugüberschlags oder einer zu hohen Geschwindigkeit nach Anspruch 8, bei dem während der Rückwärtssequenz iterativ überprüft wird, dass die maximale Sicherheitsgeschwindigkeit an

jeder Stelle (p) des vorne liegenden Abschnitts, die durch die Formel $V\max(p)=\frac{\sqrt{At\max}}{k(p)}$ vorgegeben wird, beim Fahren zu einer Stelle (p) zu der folgenden (p+1) eine Verzögerung (d.h. negative Beschleunigung) hervorruft, die die Sicherheitsrelation beachtet, und, wenn dies nicht der Fall ist, eine neue maximale Sicherheitsgeschwindigkeit unter Verwendung der Simulationsrelation berechnet wird, wobei die maximale Sicherheitsgeschwindigkeit für jede Stelle (p) des vorne liegenden Abschnitts aufgezeichnet wird.

**10.** Verfahren zur Verhinderung eines Fahrzeugüberschlags oder einer zu hohen Geschwindigkeit nach einem der Ansprüche 5 bis 9, bei dem die Simulation eine Vorwärtssequenz umfasst, während der die simulierten Beschleunigungen iterativ für jede aufeinanderfolgende Stelle des vorne liegenden Abschnitts (A) beginnend bei der derzeitigen Stelle ($P_p$) und vorwärtsgehend zu der distalen Stelle ($P_d$) berechnet werden.

**11.** Verfahren zur Verhinderung eines Fahrzeugüberschlags oder einer zu hohen Geschwindigkeit nach Anspruch 10, bei dem während der Vorwärtssequenz iterativ überprüft wird, dass die maximale Sicherheitsgeschwindigkeit an jeder Stelle (p) des vorne liegenden Abschnitts, die durch die Formel $V\max(p)=\frac{\sqrt{At\max}}{k(p)}$ vorgegeben wird oder zuvor berechnet wurde, beim Fahren von einer Stelle (p) zu der folgenden (p+1) eine Beschleunigung (d.h. positive Beschleunigung) hervorruft, die die Sicherheitsrelation beachtet, und, wenn dies nicht der Fall ist, eine neue maximale Sicherheitsgeschwindigkeit unter Verwendung der Simulationsrelation berechnet wird, wobei die maximale Sicherheitsgeschwindigkeit für jede Stelle (p) des vorne liegenden Abschnitts aufgezeichnet wird.

**12.** Verfahren zur Verhinderung eines Fahrzeugüberschlags oder einer zu hohen Geschwindigkeit nach Anspruch 8 oder 9 und 10 oder 11, bei dem die Simulation erstens die Rückwärtssequenz und zweitens die Vorwärtssequenz umfasst, die unter Verwendung maximaler Sicherheitsgeschwindigkeiten für jede Stelle des vorne liegenden Abschnitts durchgeführt werden, die während der Rückwärtssequenz berechnet wurden.

**13.** Verfahren zur Verhinderung eines Fahrzeugüberschlags oder einer zu hohen Geschwindigkeit nach einem der Ansprüche 1 bis 12, bei dem die maximale Sicherheitsgeschwindigkeit dynamisch für aufeinanderfolgende derzeitige Positionen des Fahrzeugs (V) berechnet werden, wenn es sich auf der Straße (R) bewegt.

**14.** Vorrichtung zur Verhinderung eines Fahrzeugüberschlags oder einer zu hohen Geschwindigkeit mit

- einer Einrichtung (2) für eine dynamische Bestimmung einer derzeitigen Position des auf einer Straße fahrenden Fahrzeugs,
- Einrichtungen (2, 6) für eine dynamische Bestimmung einer derzeitigen Geschwindigkeit des auf der Straße fahrenden Fahrzeugs,
- einer Speichereinrichtung (4), die speichert:

  - geometrische Daten (5) der Straße;
  - eine maximale Querbeschleunigung (Atmax), die für das Fahrzeug zulässig ist, um ohne Risiko eines Überschlags oder einer zu hohen Geschwindigkeit zu fahren,
  - eine maximale Längsbeschleunigung (Almax), die für das Fahrzeug zulässig ist, um ohne Risiko eines Überschlags oder einer zu hohen Geschwindigkeit zu fahren,

- Recheneinrichtungen (6), die so programmiert sind, dass sie das Verfahren nach einem der Ansprüche 1 bis 13 implementieren und entsprechend dem Ergebnis der Implementierung des Verfahrens ein Signal und/oder eine Aktion ausgeben.

**15.** Vorrichtung zur Verhinderung eines Fahrzeugüberschlags oder einer zu hohen Geschwindigkeit nach Anspruch 14, die außerdem umfasst:

- eine digitale Karte (5), die in der Speichereinrichtung (4) gespeichert ist,
- eine Einrichtung (7) für die Eingabe eines Zielortes,

wobei die Recheneinrichtungen (6) außerdem für eine dynamische Bestimmung des Kurses des Fahrzeugs

entsprechend seiner derzeitigen Position ($P_p$) und des Zielortes programmiert sind.

**Revendications**

1. Procédé pour empêcher le capotage d'un véhicule ou la survitesse d'un véhicule (V) se déplaçant sur une route (R), consistant au moins à :

   - calculer une vitesse de sécurité maximale pour une position actuelle ($P_p$) lorsque le véhicule se déplace sur la route en fonction :

     - de données de géométrie de la route comprenant au moins la courbure de la route (R) pour une pluralité de points situés à l'avant de la position actuelle ($P_p$) ;
     - d'une relation de sécurité que doit respecter le véhicule en mouvement (V) à tout moment ou en tout point de la route,

   - exécuter une action si la vitesse actuelle à la position actuelle dépasse la vitesse de sécurité maximale calculée pour la position actuelle,
   - **caractérisé en ce que** ladite relation de sécurité est fondée sur une comparaison de l'accélération longitudinale et transversale combinée du véhicule en un point de la route à une accélération longitudinale et transversale combinée maximale admissible pour le véhicule.

2. Procédé pour empêcher le capotage ou la survitesse d'un véhicule selon la revendication 1, dans lequel ladite relation de sécurité comprend la relation suivante :

$$\left(\frac{At}{At\max}\right)^2+\left(\frac{Al}{Al\max}\right)^2\leq 1$$

   où :

   - At est une accélération transversale du véhicule en un point de la route ;
   - Al est une accélération longitudinale du véhicule en un point de la route ;
   - Atmax est l'accélération transversale maximale admissible pour que le véhicule se déplace sans aucun risque de capotage ou de survitesse ;
   - Almax est l'accélération longitudinale maximale admissible pour que le véhicule se déplace sans aucun risque de capotage ou de survitesse.

3. Procédé pour empêcher le capotage ou la survitesse d'un véhicule selon la revendication 2, dans lequel la détermination des accélérations longitudinale maximale (Almax) et transversale maximale (Atmax) prend en compte la charge effective du véhicule et/ou la position effective du centre de gravité du véhicule.

4. Procédé pour empêcher le capotage ou la survitesse d'un véhicule selon l'une quelconque des revendications 1 à 3, dans lequel l'action comprend l'émission d'un signal d'alarme et/ou l'émission d'un ordre de ralentissement automatique du véhicule.

5. Procédé pour empêcher le capotage ou la survitesse d'un véhicule selon l'une quelconque des revendications 1 à 4, dans lequel le calcul de la vitesse de sécurité maximale pour la position actuelle comprend une simulation des accélérations transversale (At) et longitudinale (Al) pour une pluralité de points d'une partie (A) de route (R) située vers l'avant et délimitée par le point actuel ($P_p$) et un point distant ($P_d$), la vitesse de sécurité maximale, pour la position actuelle ($P_p$), étant la vitesse maximale à laquelle les accélérations simulées respectent la relation de sécurité en chaque point de la partie (A) de route (R) située vers l'avant.

6. Procédé pour empêcher le capotage ou la survitesse d'un véhicule selon la revendication 5, dans lequel la simulation fait intervenir une comparaison d'une accélération longitudinale simulée à une accélération longitudinale disponible sur la base d'une accélération transversale simulée et sur la base de la relation de sécurité.

**7.** Procédé pour empêcher le capotage ou la survitesse d'un véhicule selon la revendication 5 ou 6, dans lequel la simulation utilise au moins :

- une relation d'estimation $At_s = k(Vs)^2$ où :
- $At_s$ est une accélération transversale simulée du véhicule en un même point de la partie située vers l'avant ;
- K est la courbure de la route en ce même point de la partie située vers l'avant ;
- Vs est une vitesse de sécurité maximale en un point de la partie située vers l'avant ;
- une relation de simulation $\left(\frac{At_s}{At\max}\right)^2 + \left(\frac{Al_s}{Al\max}\right)^2 = 1$ où :
- $At_s$ est une accélération transversale simulée du véhicule en un point de la partie située vers l'avant ; et
- $Al_s$ est une accélération longitudinale simulée du véhicule en ce même point de la partie située vers l'avant ;
- et la relation de sécurité.

**8.** Procédé pour empêcher le capotage ou la survitesse d'un véhicule selon l'une quelconque des revendications 5 ou 7, dans lequel la simulation comprend une séquence se déroulant vers l'arrière pendant laquelle les accélérations simulées sont calculées de manière itérative pour chaque point consécutif de la partie (A) située vers l'avant en partant du point distant ($P_d$) et en procédant vers l'arrière jusqu'au point actuel ($P_p$).

**9.** Procédé pour empêcher le capotage ou la survitesse d'un véhicule selon la revendication 8, dans lequel, pendant la séquence se déroulant vers l'arrière, il est vérifié de manière itérative que la vitesse de sécurité maximale en chaque point (p) de la partie située vers l'avant et donnée par la formule

$$V\max(p) = \frac{\sqrt{At\max}}{k(p)}$$

induise, lors du déplacement d'un point (p) au suivant (p+1), une décélération (c'est-à-dire une accélération négative) respectant la relation de sécurité et, si cela n'est pas le cas, une nouvelle vitesse de sécurité maximale est calculée en utilisant la relation de simulation, la vitesse de sécurité maximale pour chaque point (p) de la partie située vers l'avant étant enregistrée.

**10.** Procédé pour empêcher le capotage ou la survitesse d'un véhicule selon l'une quelconque des revendications 5 à 9, dans lequel la simulation comprend une séquence se déroulant vers l'avant pendant laquelle les accélérations simulées sont calculées de manière itérative pour chaque point consécutif de la partie située vers l'avant (A) en partant du point actuel ($P_p$) et en allant vers l'avant jusqu'au point distant ($P_d$).

**11.** Procédé pour empêcher le capotage ou la survitesse d'un véhicule selon la revendication 10, dans lequel, pendant la séquence se déroulant vers l'avant, il est vérifié de manière itérative que la vitesse de sécurité maximale en chaque point (p) de la partie située vers l'avant et donnée par la formule $V\max(p) = \frac{\sqrt{At\max}}{k(p)}$ ou précédemment calculée induise, lors du déplacement d'un point (p) au suivant (p+1), une accélération (c'est-à-dire une accélération positive) respectant la relation de sécurité et, si cela n'est pas le cas, une nouvelle vitesse de sécurité maximale est calculée en utilisant la relation de simulation, la vitesse de sécurité maximale pour chaque point (p) de la partie située vers l'avant étant enregistrée.

**12.** Procédé pour empêcher le capotage ou la survitesse d'un véhicule selon les revendications 8 ou 9, et 10 ou 11, dans lequel la simulation comprend une première séquence, à savoir la séquence se déroulant vers l'arrière et une seconde séquence, à savoir la séquence se déroulant vers l'avant, mises en oeuvre en utilisant des vitesses de sécurité maximales pour chaque point de la partie située vers l'avant et calculées pendant la séquence se déroulant vers l'arrière.

**13.** Procédé pour empêcher le capotage ou la survitesse d'un véhicule selon les revendications 1 à 12, dans lequel la vitesse de sécurité maximale est calculée dynamiquement pour des positions actuelles consécutives du véhicule (V) lorsqu'il se déplace sur la route (R).

**14.** Appareil pour empêcher le capotage ou la survitesse d'un véhicule comprenant :

- des moyens (2) pour déterminer dynamiquement une position actuelle du véhicule se déplaçant sur une route ;
- des moyens (2, 6) pour déterminer dynamiquement une vitesse actuelle du véhicule se déplaçant sur la route ;
- des moyens à mémoire (4) stockant :
- des données géométriques (5) de la route ;
- une accélération transversale maximale (Atmax) admissible pour le véhicule pour qu'il se déplace sans risque de capotage ou de survitesse ;
- une accélération longitudinale maximale (Almax) admissible pour que le véhicule se déplace sans risque de capotage ou de survitesse ;
- des moyens de calcul (6) programmés pour mettre en oeuvre le procédé selon l'une quelconque des revendications 1 à 13 et pour émettre un signal et/ou un ordre d'action en fonction du résultat de la mise en oeuvre du procédé.

**15.** Appareil pour empêcher le capotage ou la survitesse d'un véhicule selon la revendication 14, comprenant en outre :

- une carte numérique (5) stockée dans le moyen à mémoire (4) ;
- des moyens (7) permettant à un utilisateur de saisir un point de destination ;

et dans lequel les moyens de calcul (6) sont en outre programmés pour déterminer dynamiquement la trajectoire du véhicule en fonction de sa position actuelle ($P_p$) et du point de destination.

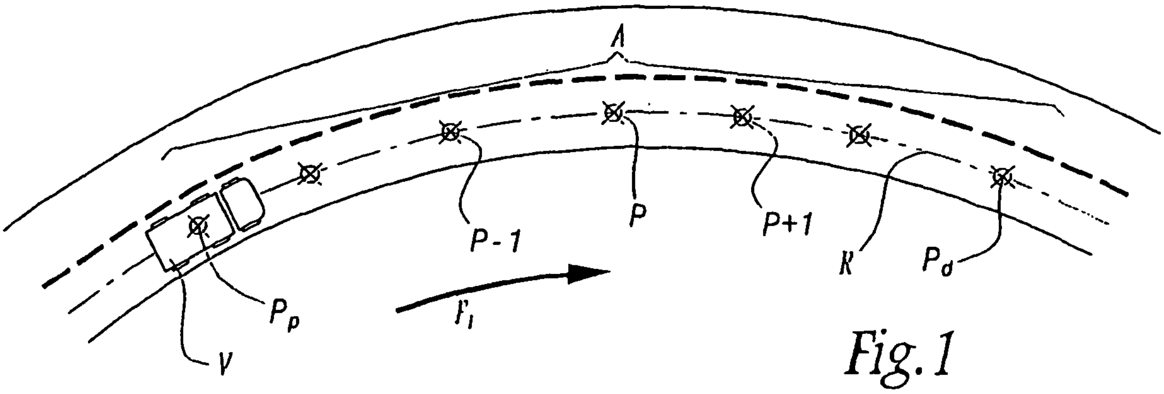


Fig.1

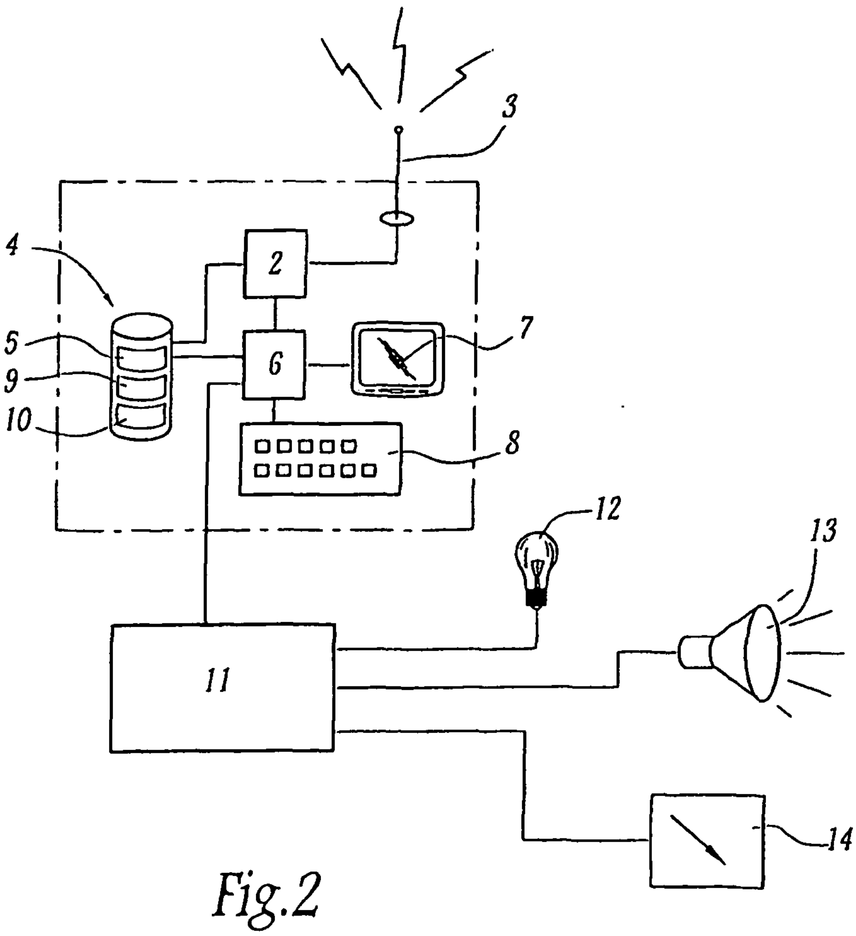


Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004110809 A